(19) Europäisches Patentamt / European Patent Office / Office européen des brevets

(11) **EP 3 852 099 B1**

(12) **EUROPEAN PATENT SPECIFICATION**

(45) Date of publication and mention of the grant of the patent:
**24.01.2024 Bulletin 2024/04**

(21) Application number: **19859327.9**

(22) Date of filing: **28.08.2019**

(51) International Patent Classification (IPC):
$G10L\ 15/20$ (2006.01)      $G06F\ 3/16$ (2006.01)
$G10L\ 15/04$ (2013.01)      $G10L\ 15/10$ (2006.01)
$G10L\ 15/28$ (2013.01)      $G10L\ 15/22$ (2006.01)
$G10L\ 15/08$ (2006.01)      $G10L\ 25/78$ (2013.01)

(52) Cooperative Patent Classification (CPC):
**G10L 15/22; G06F 3/167; G10L 15/08;** G10L 25/78;
G10L 2015/088

(86) International application number:
**PCT/JP2019/033607**

(87) International publication number:
**WO 2020/054404 (19.03.2020 Gazette 2020/12)**

(54) **KEYWORD DETECTION APPARATUS, KEYWORD DETECTION METHOD, AND PROGRAM**

SCHLÜSSELWORTDETEKTIONSVORRICHTUNG, SCHLÜSSELWORTDETEKTIONSVERFAHREN UND PROGRAMM

DISPOSITIF DE DÉTECTION DE MOT CLÉ, PROCÉDÉ DE DÉTECTION DE MOT CLÉ ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2018 JP 2018169550**

(43) Date of publication of application:
**21.07.2021 Bulletin 2021/29**

(73) Proprietor: **NIPPON TELEGRAPH AND TELEPHONE CORPORATION**
**Chiyoda-ku, Tokyo 100-8116, (JP)**

(72) Inventors:
• **KOBAYASHI, Kazunori**
  **Musashino-shi, Tokyo 180-8585 (JP)**
• **SAITO, Shoichiro**
  **Musashino-shi, Tokyo 180-8585 (JP)**
• **ITO, Hiroaki**
  **Musashino-shi, Tokyo 180-8585 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**WO-A1-2017/069556      JP-A- 2006 039 382**
**US-A1- 2016 379 633      US-A1- 2018 174 574**
**US-B1- 9 734 845**

• **Nakasai Kazuhiro: "On-vehicle voice HMI based on robot audition", Preprints of the 33rd Annual Conference of The Robotics Society of Japan; 2015.09.03-05, 3 September 2015 (2015-09-03), pages 1374-1377, XP009526294,**

**Description**

[Technical Field]

The present invention relates to a technique for detecting that a keyword has been uttered.

[Background Art]

An apparatus that can be controlled by voice, such as a smart speaker or an on-board system, may be equipped with a function called "keyword wakeup", which starts speech recognition upon a keyword that serves as a trigger being uttered. Such a function requires a technique for detecting the utterance of a keyword from an input voice signal.

Fig. 1 shows a configuration according to a conventional technique disclosed in Non-Patent Literature 1. According to the conventional technique, upon a keyword detection unit 91 detecting the utterance of a keyword from an input voice signal, a target sound output unit 99 turns a switch on, and outputs the voice signal as a target sound that is to be subjected to speech recognition or the like. Patent Literature 1 discloses systems and methods for reducing false alarms in keyword detection are provided. An example method includes detecting a keyword in an acoustic signal. The acoustic signal can represent at least one captured sound. The method also includes acquiring an estimate of speech activity for a portion of the acoustic signal preceding the keyword. In some embodiments, the estimate includes an average of a voice activity detection output over frames of the acoustic signal within the portion preceding the keyword. If the estimate is less than a threshold, the method can accept the keyword detection. If the estimate is larger than the threshold, the method proceeds to reject the keyword detection.

Patent Literature 2 discloses a speech-based system that receives multiple directional audio signals, each of which emphasizes sound from a different direction. The signals are monitored and analyzed to detect the directions of interfering audio sources such as televisions or other types of electronic audio players. One of the directional signals having the strongest presence of speech is selected to be monitored for the trigger expression. If the directional signal corresponds to the direction of an interfering audio source, a more strict standard is used to detect the trigger expression. In addition, the directional audio signal having the second strongest presence of speech may also be monitored to detect the trigger expression.

[Citation List]

[Non-Patent Literature]

Non-Patent Literature 1: Sensory, Inc., "TrulyHandsfreeTM", [online], [searched on August 17, 2018], the Internet <URL: http://www.sensory.co.jp/product/thf.htm>

[Patent Literature]

Patent Literature 1: US 2018/174574 A1
Patent Literature 2: US 9 734 845 B1

[Summary of the Invention]

[Technical Problem]

However, according to the conventional technique, even when an utterance is not intended for keyword detection, if the utterance contains a keyword or a phoneme that is similar to the keyword, the apparatus may react with the keyword or the phoneme that is similar to the keyword, and falsely detect the keyword. For example, when the keyword is "Hello, ABC", the apparatus says "the keyword is "Hello, ABC"" to the user. In this way, the keyword may be uttered despite the utterance being not intended for keyword detection.

With the foregoing technical problem in view, it is an object of the present invention to prevent a keyword from being falsely detected from an utterance that is not intended for keyword detection.

[Means for Solving the Problem]

The present invention provides a keyword detection apparatus, a keyword detection method, and a program, having the features of respective independent claims. The dependent claims relate to embodiments.

A keyword detection apparatus according to one aspect of the invention includes: a keyword detection unit that generates a keyword detection result indicating a result of detecting an utterance of a predetermined keyword from an input voice; a voice detection unit that generates a voice section detection result indicating a result of detecting a voice section from the input voice; a delay unit that gives a delay that is at least longer than an average utterance time of the keyword, to the voice section detection result; and an in-sentence keyword excluding unit that updates the keyword detection result to a result indicating that the keyword has not been detected when the keyword detection result indicates that the keyword has been detected and the delayed voice section detection result output from the delay unit indicates that a voice section has been detected.

[Effects of the Invention]

According to the present invention, it is possible to prevent a keyword from being falsely detected from an utterance that is not intended for keyword detection.

[Brief Description of Drawings]

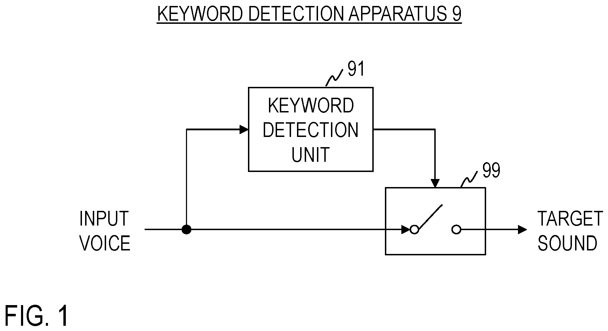

Fig. 1 is a diagram illustrating a functional configuration of a conventional keyword detection apparatus.
Fig. 2 is a diagram illustrating a functional configuration of a keyword detection apparatus according to a first embodiment.
Fig. 3 is a diagram illustrating processing procedures of a keyword detection method according to the first embodiment.
Fig. 4 is a diagram illustrating the principles of the first embodiment.
Fig. 5 is a diagram illustrating a functional configuration of a keyword detection apparatus according to a second embodiment.
Fig. 6 is a diagram illustrating processing procedures of a keyword detection method according to the second embodiment.
Fig. 7 is a diagram illustrating the principles of the second embodiment.
Fig. 8 is a diagram illustrating a functional configuration of a keyword detection apparatus according to a third embodiment.

[Description of Embodiments]

Hereinafter, embodiments of the present invention will be described in detail. In the drawings, components that have the same function are given the same reference numerals, and duplicate descriptions will be omitted.

[First Embodiment]

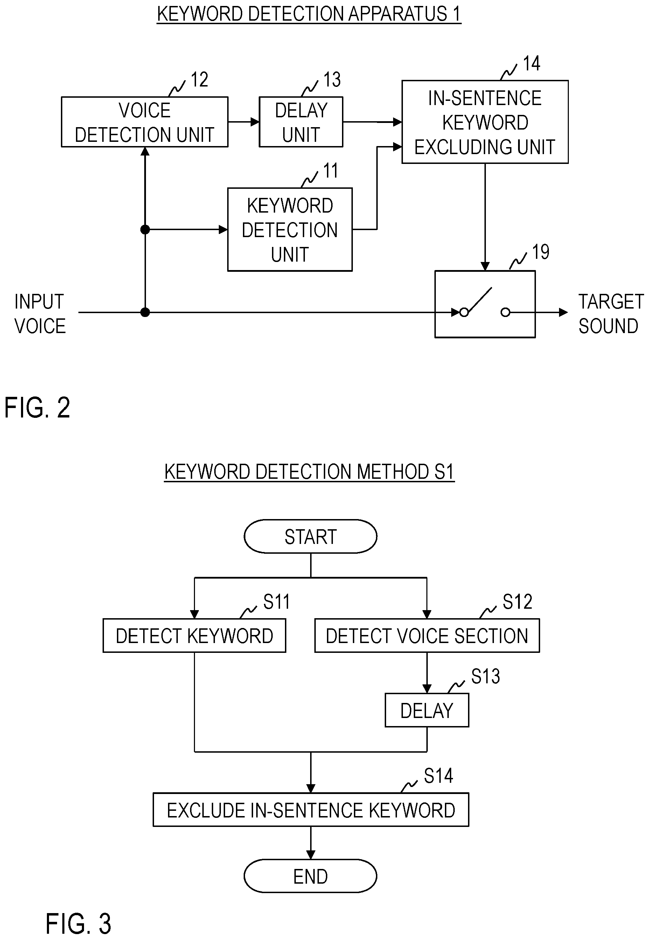

A keyword detection apparatus 1 according to a first embodiment receives a voice of a user as an input (hereinafter referred to as an "input voice"), and, upon detecting a keyword from the input voice, outputs a target sound that is to be subjected to speech recognition or the like. As shown in Fig. 2, the keyword detection apparatus 1 includes a keyword detection unit 11, a voice detection unit 12, a delay unit 13, an in-sentence keyword excluding unit 14, and a target sound output unit 19. A keyword detection method S1 according to the first embodiment is realized by the keyword detection apparatus 1 executing the processing in the steps shown in Fig. 3.

The keyword detection apparatus 1 is a special apparatus formed by loading a special program to a well-known or dedicated computer that includes a central processing unit (CPU), a main memory (a random-access memory (RAM)), and so on. The keyword detection apparatus 1 performs various kinds of processing under the control of the central processing unit. Data input to the keyword detection apparatus 1 or data obtained through various kinds of processing is stored in the main memory, for example, and is loaded to the central processing unit and is used in another kind of processing when necessary. At least part of each processing unit of the keyword detection apparatus 1 may be constituted by hardware such as a semiconductor circuit.

With reference to Fig. 3, the following describes the keyword detection method carried out by the keyword detection apparatus according to the first embodiment.

In step S11, the keyword detection unit 11 detects the utterance of a predetermined keyword from an input voice. A keyword is detected by determining whether or not a power spectrum pattern obtained in short-term cycles is similar to a pattern of the keyword recorded in advance, using a neural network learned in advance. The keyword detection unit 11 outputs a keyword detection result indicating that a keyword has been detected ("a keyword detected") or indicating that a keyword has not been detected ("no keyword detected") to the in-sentence keyword excluding unit 14.

In step S12, the voice detection unit 12 detects a voice section from the input voice. For example, a voice section is detected in the following manner. First, a stationary noise level N(t) is obtained from a long-term average of the input voice. Next, a threshold value is set by multiplying the stationary noise level N(t) by a predetermined constant $\alpha$. Thereafter, a section in which a short-term average level P(t) is higher than the threshold value is detected as a voice section. Alternatively, a voice section may be detected by using a method in which whether or not the shape of a spectrum or a cepstrum matches the features of a voice is added to factors of determination. The voice detection unit 12 outputs a voice section detection result indicating that a voice section has been detected ("a voice detected") or indicating that a voice section has not been detected ("no voice detected") to the delay unit 13.

The short-term average level P(t) is obtained by calculating a root mean square power multiplied by a rectangular window of an average keyword utterance time T or a root mean square power multiplied by an exponential window. When a power and an input signal at a discrete time t are respectively denoted as P(t) and x(t), the following formulae are satisfied.

$$P(t) = \frac{1}{T}\sum_{n=t-T}^{t} x(t)^2$$

$$P(t) = \alpha P(t-1) + (1-\alpha)x(t)^2$$

Note that $\alpha$ is a forgetting factor, and a value that satisfies $0 < \alpha < 1$ is set in advance. $\alpha$ is set so that the time constant is an average keyword utterance time T (sample). That is to say, $\alpha = 1 - 1/T$ is satisfied. Alternatively, an absolute value average power multiplied by a rectangular window of the keyword utterance time T or an absolute value average power multiplied by an exponential window may be calculated as expressed by the following formulae.

$$P(t) = \frac{1}{T}\sum_{n=t-T}^{t} |x(t)|$$

$$P(t) = \alpha P(t-1) + (1-\alpha)|x(t)|$$

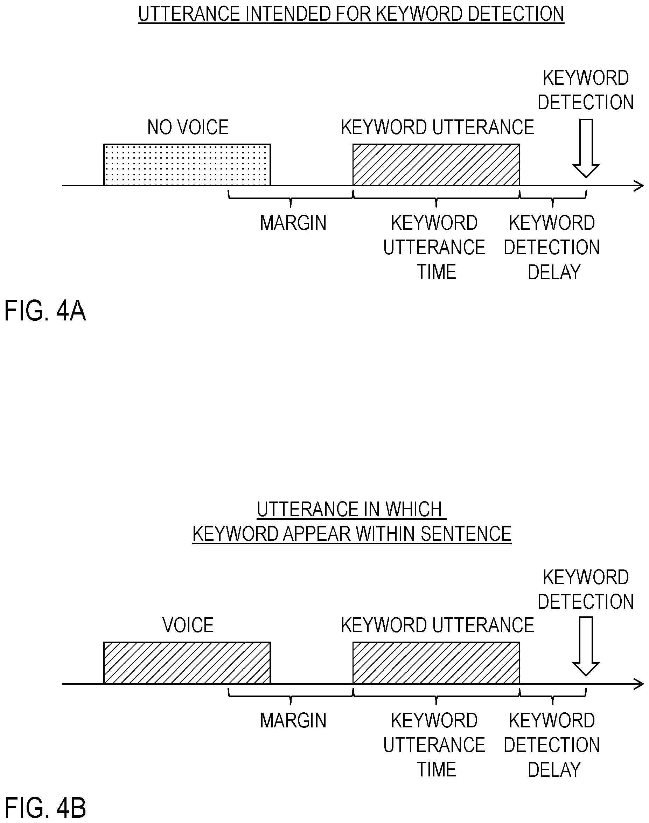

In step S13, the delay unit 13 delays the voice section detection result output from the voice detection unit 12 by a time obtained by adding a detection delay time of keyword detection, an average utterance time of the keyword, and a margin time. Fig. 4 shows a temporal relationship in the case of an utterance intended for keyword detection (Fig. 4A) and the case of an utterance in which the keyword appears within a sentence (Fig. 4B). The margin time is within the range of several hundred milliseconds to several seconds, for example. The delay unit 13 outputs the delayed voice section detection result to the in-sentence keyword excluding unit 14.

In step S14, the in-sentence keyword excluding unit 14 excludes the detection result regarding the keyword in a sentence from the keyword detection result output from the keyword detection unit 11, and outputs such a keyword detection result to the target sound output unit 19. Specifically, if the keyword detection result output from the keyword detection unit 11 indicates "a keyword detected" and the voice section detection result output from the delay unit 13 is "a voice detected", the in-sentence keyword excluding unit 14 determines that the keyword is a keyword in a sentence, and updates the keyword detection result to "no keyword detected" and outputs such a result. If the keyword detection result output from the keyword detection unit 11 indicates "a keyword detected" and the voice section detection result output from the delay unit 13 is "no voice detected", the in-sentence keyword excluding unit 14 determines that the utterance is intended for keyword detection, and outputs "a keyword detected" without change. Here, it is possible to employ a method in which a threshold value for the likelihood of keyword detection is set, and the keyword detection result is updated to "no keyword detected" only when the likelihood of keyword detection is lower than the threshold value, instead of the keyword detection result being invariably updated to "no keyword detected" when the voice section detection result indicates "a voice detected".

In step S19, if the keyword detection result output from the in-sentence keyword excluding unit 14 is "a keyword detected", the target sound output unit 19 turns the switch on and outputs the input voice as a target sound. If the keyword detection result output from the in-sentence keyword excluding unit 14 is "no keyword detected", the target sound output unit 19 turns the switch off and stops the output.

With such a configuration, according to the first embodiment, it is possible to exclude a keyword that appears within a sentence uttered by the user so as not be detected, and it is possible to prevent a keyword from being falsely detected from an utterance that is not intended for keyword detection.

[Second Embodiment]

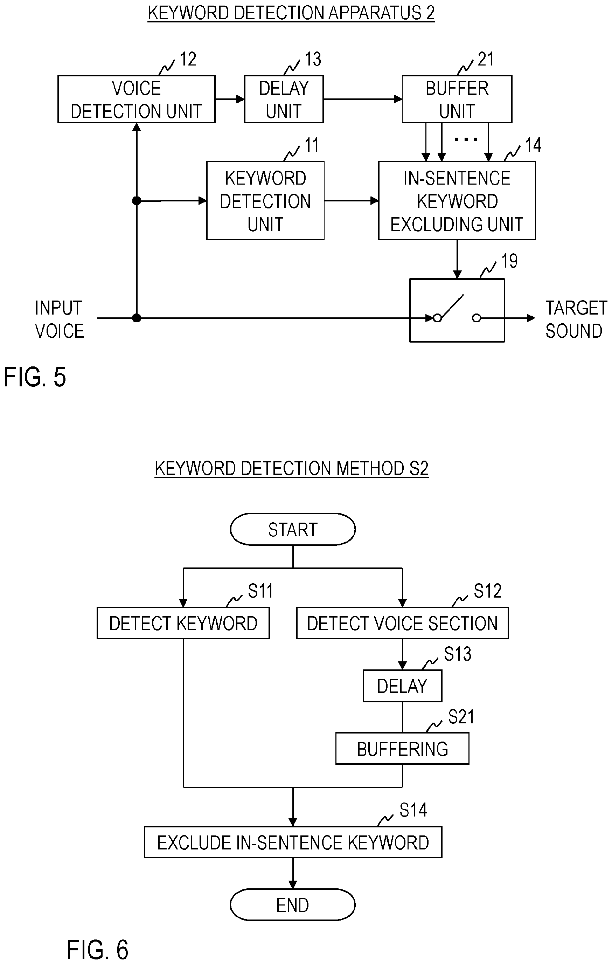

As in the first embodiment, a keyword detection apparatus 2 according to a second embodiment receives a voice of a user as an input, and, upon detecting a keyword from the input voice, outputs a target sound that is to be subjected to speech recognition or the like. As shown in Fig. 5, the keyword detection apparatus 2 further includes a buffer unit 21 in addition to the keyword detection unit 11, the voice detection unit 12, the delay unit 13, the in-sentence keyword excluding unit 14, and the target sound output unit 19 in the first embodiment. A keyword detection method S2 according to the second embodiment is realized by the keyword detection apparatus 2 executing the processing in the steps shown in Fig. 6.

With reference to Fig. 6, the following describes the keyword detection method carried out by the keyword detection apparatus according to the second embodiment, mainly concerning differences from the keyword detection method according to the first embodiment.

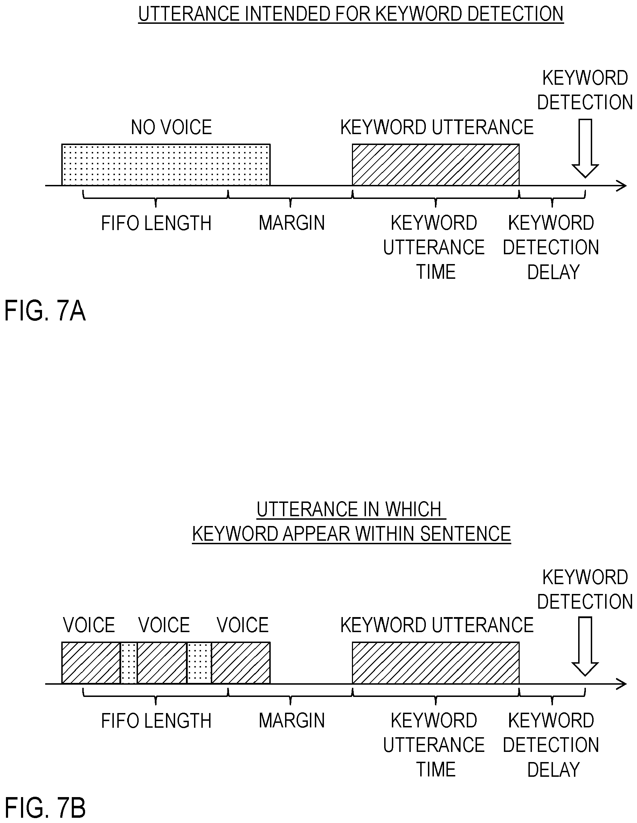

In step S21, the buffer unit 21 holds voice section detection results, which correspond to a predetermined time length, output from the delay unit 13, in a first-in first-out (FIFO) manner. Fig. 7 shows a temporal relationship in the case of an utterance intended for keyword detection (Fig. 7A) and the case of an utterance in which the keyword appears within a sentence (Fig. 7B) . The period during which the result is held (the FIFO length) is within the range of several hundred milliseconds to several seconds, for example.

In step S14, if the keyword detection result output from the keyword detection unit 11 indicates "a keyword detected" and any one of the voice section detection results held by the buffer unit 21 is "a voice detected", the in-sentence keyword excluding unit 14 determines that the keyword is a keyword in a sentence, and updates the keyword detection result to "no keyword detected" and outputs such a result. If the keyword detection result output from the keyword detection unit 11 indicates "a keyword detected" and all of the voice section detection results held by the buffer unit 21 are "no voice detected", the in-sentence keyword excluding unit 14 determines that the utterance is intended for keyword detection and outputs "a keyword detected" without change.

With such a configuration, according to the second embodiment, the presence or absence of a voice is determined based on the detection results through the entire time section held by the buffer unit 21. Therefore, it is possible to prevent a keyword that has uttered accidentally during a pause section between utterances from being subjected to determination as to whether or not the keyword is within a sentence, and prevent a keyword appearing within a sentence from being falsely detected.

[Third Embodiment]

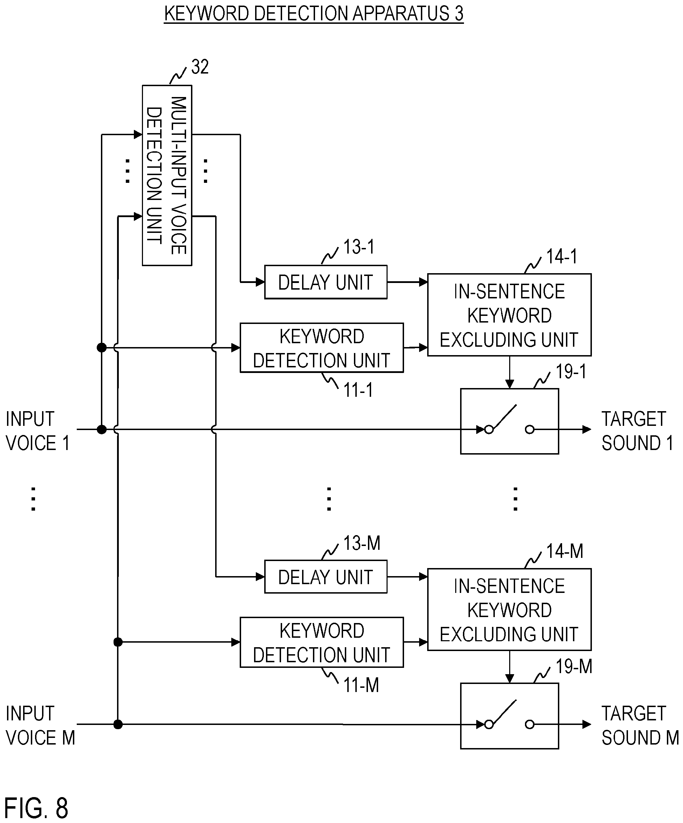

A keyword detection apparatus 3 according to the third embodiment receives multi-channel voice signals as inputs, and outputs a voice signal of the channel from which a keyword has been detected, as a target sound that is to be subjected to speech recognition or the like. As shown in Fig. 8, the keyword detection apparatus 3 includes M sets each consisting of the keyword detection unit 11, the delay unit 13, the in-sentence keyword excluding unit 14, and the target sound output unit 19 according to the first embodiment, where M ($\geq$ 2) is the number of channels of the input voices, and the keyword detection apparatus 3 also includes an M-channel input/output multi-input voice detection unit 32.

The multi-input voice detection unit 32 receives multi-channel voice signals as inputs, and outputs the voice section detection result of detecting a voice section from a voice signal of an i-th channel, to a delay unit 13-i, for each integer i from 1 to M. The multi-input voice detection unit 32 can more accurately detect a voice section by exchanging audio level information between the channels. The method disclosed in Reference Document 1 shown below can be employed as a voice section detection method for multi-channel inputs.

[Reference Document 1] Japanese Patent Application Publication No. 2017-187688

With such a configuration, according to the third embodiment, it is possible to accurately detect a voice section when multi-channel voice signals are input, which accordingly improves accuracy in keyword detection.

Although embodiments of the present invention have been described above, a specific configuration is not limited to the embodiments. The various kinds of processing described in the embodiments are not necessarily executed in chronological order according to order of descriptions, and may be parallelly or individually executed depending on the processing capabilities of the apparatus that executes the processing or according to the need.

[Program and Recording Medium]

When the various processing functions of the apparatuses described in the above embodiments are realized using a computer, the functions that the apparatuses need to have are to be described in the form of a program. A computer executes the program, and thus the various processing functions of the above apparatuses are realized on the computer.
The program that describes the contents of such processing can be recorded on a computer-readable recording medium. Any kind of computer-readable recording medium may be employed, such as a magnetic recording device, an optical disc, a magneto-optical recording medium, or a semiconductor memory.
The program is distributed by, for example, selling, transferring, or lending a portable recording medium such as a DVD or a CD-ROM on which the program is recorded. Furthermore, it is possible to employ a configuration in which the program is stored in a storage device of a server computer, and the program is distributed by the server computer transferring the program to other computers via a network.
A computer that executes such a program first stores, in a storage device thereof, the program that is recorded on a portable recording medium or that has been transferred from a server computer. Thereafter, when executing processing, the computer reads the program stored in the storage device thereof, and executes processing according to the program thus read. In another mode of execution of the program, the computer may read the program directly from a portable recording medium and execute processing according to the program. In addition, the computer may sequentially execute processing according to the received program every time the computer receives the program transferred from a server computer. Also, it is possible to employ a configuration for executing the above-described processing by using a so-called ASP (Application Service Provider) type service, which does not transfer a program from the server computer to the computer, but realizes processing functions by only making instructions to execute the program and acquiring the results. The program according to the embodiments may be information that is used by an electronic computer to perform processing, and that is similar to a program (e.g. data that is not a direct command to the computer, but has the property of defining computer processing).
Also, although the apparatus is formed by running a predetermined program on a computer in the embodiments, at least part of the content of the above processing may be realized using hardware.

[Reference Signs List]

| 1, 2, 3, 9 | Keyword detection apparatus |
| 11, 91 | Keyword detection unit |
| 12 | Voice detection unit |
| 13 | Delay unit |
| 14 | In-sentence keyword excluding unit |
| 19, 99 | Target sound output unit |
| 21 | Buffer unit |
| 32 | Multi-input voice detection unit |

**Claims**

**1.** A keyword detection apparatus (1, 2, 3) comprising:

a keyword detection unit (11) that is configured to generate a keyword detection result indicating a result of detecting an utterance of a predetermined keyword from an input voice;
a voice detection unit (12) that is configured to generate a voice section detection result indicating a result of detecting a voice section from the input voice;
a delay unit (13) that is configured to give a delay that is at least longer than an average utterance time of the keyword, to the voice section detection result; and
an in-sentence keyword excluding unit (14) that is configured to update the keyword detection result to a result indicating that the keyword has not been detected when the keyword detection result indicates that the keyword has been detected and the delayed voice section detection result output from the delay unit (13) indicates that a voice section has been detected.

2. The keyword detection apparatus (2) according to claim 1, further comprising

a buffer unit (21) that is configured to hold, in a first-in first-out manner, the plurality of voice section detection results,
wherein the in-sentence keyword excluding unit (14) is configured to update the keyword detection result to a result indicating that the keyword has not been detected when the keyword detection result indicates that the keyword has been detected and at least one of the voice section detection results held by the buffer unit (21) indicates that a voice section has been detected.

3. The keyword detection apparatus (3) according to claim 1, wherein

the input voice is a voice signal that includes a plurality of channels,
the voice detection unit (12) is configured to generate the voice section detection result for each of the channels included in the input voice, and
the keyword detection apparatus (3) is configured to include a given number of sets each consisting of the keyword detection unit (11), the delay unit (13), and the in-sentence keyword excluding unit (14), where the given number is equal to the number of channels included in the input voice.

4. A keyword detection method comprising:

generating (S11), using a keyword detection unit (11), a keyword detection result indicating a result of detecting an utterance of a predetermined keyword from an input voice;
generating (S12), using a voice detection unit (12), a voice section detection result indicating a result of detecting a voice section from the input voice;
giving (S13), using a delay unit (13), a delay that is at least longer than an average utterance time of the keyword, to the voice section detection result; and
updating (S14), using an in-sentence keyword excluding unit (14), the keyword detection result to a result indicating that the keyword has not been detected when the keyword detection result indicates that the keyword has been detected and the delayed voice section detection result output from the delay unit (13) indicates that a voice section has been detected.

5. A program configured to cause a computer to function as the keyword detection apparatus according to any one of claims 1 to 3.

**Patentansprüche**

1. Schlüsselwort-Detektionsvorrichtung (1, 2, 3), umfassend:

eine Schlüsselwort-Detektionseinheit (11), die dazu ausgelegt ist, ein Schlüsselwort-Detektionsergebnis zu generieren, das ein Ergebnis des Detektierens einer Äußerung eines vorgegebenen Schlüsselwortes aus einer eingegebenen Sprache angibt,
eine Sprachdetektionseinheit (12), die dazu ausgelegt ist, ein Sprachabschnitt-Detektionsergebnis zu generieren, das ein Ergebnis des Detektierens eines Sprachabschnitts aus der eingegebenen Sprache anzeigt,
eine Verzögerungseinheit (13), die dazu ausgelegt ist, dem Sprachabschnitt-Detektionsergebnis eine Verzögerung zu verleihen, die mindestens länger ist als eine durchschnittliche Äußerungsdauer des Schlüsselwortes, und
eine Einheit (14) zum Ausschließen eines Schlüsselwortes in einem Satz, die dazu ausgelegt ist, das Schlüsselwort-Detektionsergebnis auf ein Ergebnis zu aktualisieren, das angibt, dass das Schlüsselwort nicht detektiert wurde, wenn das Schlüsselwort-Detektionsergebnis angibt, dass das Schlüsselwort detektiert wurde, und das von der Verzögerungseinheit (13) ausgegebene verzögerte Sprachabschnitt-Detektionsergebnis angibt, dass ein Sprachabschnitt detektiert wurde.

2. Schlüsselwort-Detektionsvorrichtung (2) nach Anspruch 1, die ferner eine Puffereinheit (21) umfasst, die dazu ausgelegt ist, die Mehrzahl von Sprachabschnitt-Detektionsergebnissen in einer First-In-First-Out-Weise zu halten,

wobei die Einheit (14) zum Ausschließen eines Schlüsselwortes in einem Satz dazu ausgelegt ist, das Schlüsselwort-Detektionsergebnis auf ein Ergebnis zu aktualisieren, das angibt, dass das Schlüsselwort nicht detektiert wurde, wenn das Schlüsselwort-Detektionsergebnis angibt, dass das Schlüsselwort detektiert wurde, und mindestens eines der durch die Puffereinheit (21) gehaltenen Sprachabschnitt-Detektionsergebnisse angibt, dass ein Sprachabschnitt detektiert wurde.

3. Schlüsselwort-Detektionsvorrichtung (3) nach Anspruch 1, wobei

die eingegebene Sprache ein Sprachsignal ist, das eine Mehrzahl von Kanälen umfasst,
die Sprachdetektionseinheit (12) ausgelegt ist, um das Sprachabschnitt-Detektionsergebnis für jeden der in der eingegebenen Sprache aufgenommenen Kanäle zu generieren, und
die Schlüsselwort-Detektionsvorrichtung (3) derart ausgelegt ist, dass sie eine gegebene Anzahl von Sätzen aufnimmt, die jeweils die Schlüsselwort-Detektionseinheit (11), die Verzögerungseinheit (13), und die Einheit (14) zum Ausschließen eines Schlüsselwortes in einem Satz aufweisen, wobei die gegebene Anzahl der Anzahl von Kanälen gleicht, die in der eingegebenen Sprache aufgenommen sind.

4. Schlüsselwort-Detektionsverfahren, umfassend:

Generieren (S11), unter Verwendung einer Schlüsselwort-Detektionseinheit (11), eines Schlüsselwort-Detektionsergebnisses, das ein Ergebnis des Detektierens einer Äußerung eines vorgegebenen Schlüsselwortes aus einer eingegebenen Sprache angibt,
Generieren (S12), unter Verwendung einer Sprachdetektionseinheit (12), eines Sprachabschnitt-Detektionsergebnisses, das ein Ergebnis des Detektierens eines Sprachabschnitts aus der eingegebenen Sprache angibt,
Verleihen (S13), unter Verwendung einer Verzögerungseinheit (13), einer Verzögerung dem Sprachabschnitt-Detektionsergebnis, die mindestens länger ist als eine durchschnittliche Äußerungsdauer des Schlüsselwortes, und
Aktualisieren (S14), unter Verwendung einer Einheit (14) zum Ausschließen eines Schlüsselwortes in einem Satz, des Schlüsselwort-Detektionsergebnisses auf ein Ergebnis, das angibt, dass das Schlüsselwort nicht detektiert wurde, wenn das Schlüsselwort-Detektionsergebnis angibt, dass das Schlüsselwort detektiert wurde, und das von der Verzögerungseinheit (13) ausgegebene verzögerte Sprachabschnitt-Detektionsergebnis angibt, dass ein Sprachabschnitt detektiert wurde.

5. Programm, das ausgelegt ist, um einen Computer dazu zu veranlassen, als die Schlüsselwort-Detektionsvorrichtung nach einem der Ansprüche 1 bis 3 zu funktionieren.

**Revendications**

1. Appareil de détection de mot-clé (1, 2, 3) comprenant :

une unité de détection de mot-clé (11) qui est configurée pour générer un résultat de détection de mot-clé indiquant un résultat de détection d'un énoncé d'un mot-clé prédéterminé à partir d'une voix d'entrée ;
une unité de détection vocale (12) qui est configurée pour générer un résultat de détection de section vocale indiquant un résultat de détection d'une section vocale à partir de la voix d'entrée ;
une unité de retard (13) qui est configurée pour donner un retard qui est au moins plus long qu'un temps d'énoncé moyen du mot-clé, au résultat de détection de section vocale ; et
une unité d'exclusion de mot-clé en phrase (14) qui est configurée pour mettre à jour le résultat de détection de mot-clé à un résultat indiquant que le mot-clé n'a pas été détecté lorsque le résultat de détection de mot-clé indique que le mot-clé a été détecté et le résultat de détection de section vocale retardé délivré depuis l'unité de retard (13) indique qu'une section vocale a été détectée.

2. Appareil de détection de mot-clé (2) selon la revendication 1, comprenant en outre

une unité de mémoire tampon (21) qui est configurée pour contenir, d'une manière premier entré premier sorti, la pluralité de résultats de détection de section vocale,
dans lequel l'unité d'exclusion de mot-clé en phrase (14) est configurée pour mettre à jour le résultat de détection de mot-clé à un résultat indiquant que le mot-clé n'a pas été détecté lorsque le résultat de détection de mot-clé indique que le mot-clé a été détecté et au moins l'un des résultats de détection de section vocale contenus dans l'unité de mémoire tampon (21) indique qu'une section vocale a été détectée.

3. Appareil de détection de mot-clé (3) selon la revendication 1, dans lequel

la voix d'entrée est un signal vocal qui inclut une pluralité de canaux,
l'unité de détection vocale (12) est configurée pour générer le résultat de détection de section vocale pour chacun des canaux inclus dans la voix d'entrée, et
l'appareil de détection de mot-clé (3) est configuré pour inclure un nombre donné d'ensembles se composant chacun de l'unité de détection de mot-clé (11), l'unité de retard (13) et l'unité d'exclusion de mot-clé en phrase (14), le nombre donné étant égal au nombre de canaux inclus dans la voix d'entrée.

4. Procédé de détection de mot-clé comprenant :

la génération (S11), en utilisant une unité de détection de mot-clé (11), d'un résultat de détection de mot-clé indiquant un résultat de détection d'un énoncé d'un mot-clé prédéterminé à partir d'une voix d'entrée ;
la génération (S12), en utilisant une unité de détection vocale (12), d'un résultat de détection de section vocale indiquant un résultat de détection d'une section vocale à partir de la voix d'entrée ;
le fait de donner (S13), en utilisant une unité de retard (13), un retard qui est au moins plus long qu'un temps d'énoncé moyen du mot-clé, au résultat de détection de section vocale ; et
la mise à jour (S14), en utilisant une unité d'exclusion de mot-clé en phrase (14), du résultat de détection de mot-clé à un résultat indiquant que le mot-clé n'a pas été détecté lorsque le résultat de détection de mot-clé indique que le mot-clé a été détecté et le résultat de détection de section vocale retardé délivré depuis l'unité de retard (13) indique qu'une section vocale a été détectée.

5. Programme configuré pour amener un ordinateur à fonctionner en tant que l'appareil de détection de mot-clé selon l'une quelconque des revendications 1 à 3.

KEYWORD DETECTION APPARATUS 9

FIG. 1

KEYWORD DETECTION APPARATUS 1

FIG. 2

KEYWORD DETECTION METHOD S1

FIG. 3

UTTERANCE INTENDED FOR KEYWORD DETECTION

KEYWORD
DETECTION

NO VOICE          KEYWORD UTTERANCE

MARGIN          KEYWORD          KEYWORD
                UTTERANCE        DETECTION
                TIME             DELAY

FIG. 4A

UTTERANCE IN WHICH
KEYWORD APPEAR WITHIN SENTENCE

KEYWORD
DETECTION

VOICE          KEYWORD UTTERANCE

MARGIN          KEYWORD          KEYWORD
                UTTERANCE        DETECTION
                TIME             DELAY

FIG. 4B

KEYWORD DETECTION APPARATUS 2

FIG. 5

KEYWORD DETECTION METHOD S2

FIG. 6

UTTERANCE INTENDED FOR KEYWORD DETECTION

KEYWORD
DETECTION

NO VOICE          KEYWORD UTTERANCE

FIFO LENGTH    MARGIN    KEYWORD      KEYWORD
                          UTTERANCE    DETECTION
                          TIME         DELAY

FIG. 7A

UTTERANCE IN WHICH
KEYWORD APPEAR WITHIN SENTENCE

KEYWORD
DETECTION

VOICE  VOICE  VOICE    KEYWORD UTTERANCE

FIFO LENGTH    MARGIN    KEYWORD      KEYWORD
                          UTTERANCE    DETECTION
                          TIME         DELAY

FIG. 7B

KEYWORD DETECTION APPARATUS 3

FIG. 8

**EP 3 852 099 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018174574 A1

- US 9734845 B1

**Non-patent literature cited in the description**

- *TrulyHandsfreeTM,* 17 August 2018, http://www.sensory.co.jp/product/thf.htm